(19) **Europäisches Patentamt**

**European Patent Office**

**Office européen des brevets**

(11) **EP 1 725 044 A2**

(12) **EUROPEAN PATENT APPLICATION**

(43) Date of publication:
**22.11.2006 Bulletin 2006/47**

(51) Int Cl.:
***H04N 7/26*** (2006.01)

(21) Application number: **06252390.7**

(22) Date of filing: **05.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.05.2005 US 682030 P**
**10.08.2005 US 200914**

(71) Applicant: **Ensequence, Inc.**
**Portland,**
**Oregon 97204 (US)**

(72) Inventor: **Westerman, Larry A.**
**Portland, OR 97210 (US)**

(74) Representative: **Carlin, Robert George et al**
**Olswang**
**90 High Holborn**
**London WC1V 6XX (GB)**

(54) **Flexible use of MPEG encoded images**

(57) Systems and methods for encoding a sub-image, using conventional MPEG encoding technique, to generate a special image file that is smaller than the equivalent full-frame image file. This special image file can be used to regenerate any of a multiplicity of full-sized encoded image files, each of which results in the display of the sub-frame image at one of a multiplicity of positions within the full-sized image frame.

FIG. 7

**Description**

**PRIORITY INFORMATION**

This application claims priority to provisional patent application serial no. 60/682,030, filed May 16, 2005 and is incorporated herein by reference.

**FIELD OF THE INVENTION**

This invention relates generally to bandwidth reduction in the transmittal of images using digital communications techniques.

**BACKGROUND OF THE INVENTION**

The MPEG video compression standards (ISO/IEC 11172-2 and 13818-2) provide powerful and flexible mechanisms for conveying full-color image data over a digital transmission mechanism. The standards use digital cosine transformation techniques, along with coefficient quantization and Huffman binary encoding, to define compact and highly efficient representations of video images. A number of systems utilize MPEG video compression to convey video and still image content, including digital satellite and cable television (TV) and high-definition TV (HDTV).

Of particular interest in the current invention is use of MPEG video compression for transmittal to integrated receiver/decoders (IRD, sometimes called set-top boxes or STBs). Such systems typically have limited hardware and software capability, and so make use of particular aspects of the MPEG video standard to provide functionality. STBs often are used to receive and execute interactive television (iTV) applications, small pieces of software that create specialized audio, video and graphics presentations for the viewer, typically in response to a remote control device supplied with the STB.

Normally, an STB receives an MPEG transport stream, which contains various meta-data, one or more elementary video streams, and one or more elementary audio streams. The STB hardware selectively processes one of the elementary video streams, in real time, decoding and displaying the sequence of video images encoded in the video stream. The STB may also possess the capability to create and display a graphical pattern overlaying the video image, including text, icons and graphical images. Due to the low cost and limited capability of the STB hardware, graphical content is often limited to only a few colors, typically 16 or 256. This limits the quality and variety of static content that can be displayed to the viewer by the STB when executing an iTV application.

To overcome the graphical limitations of the STB, the MPEG video decoding hardware can be used to decode and display static full-color still images, possibly in place of the display of the streaming video content. This can be accomplished by transmitting to the STB a data file containing the MPEG-encoded still image, then passing the MPEG data through a standard MPEG decoder in place of the elementary video stream. The decoder parses the MPEG image data and creates the corresponding full-size, full-color still image, which is then displayed on the screen of the attached television receiver.

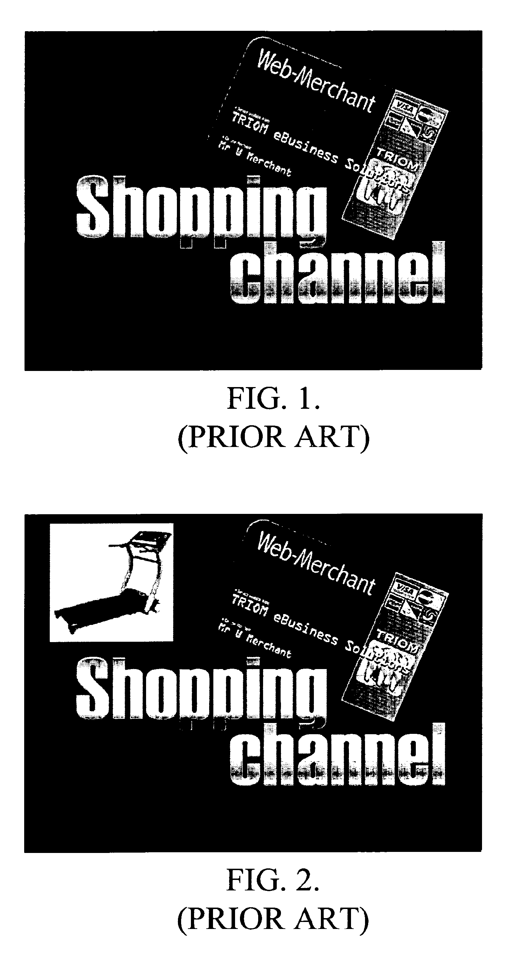

One useful feature of the MPEG video compression scheme is the ability to encode a predictive, or P-frame, image. In a P-frame image, any desired portion of the image can be predicted from the previous reference image processed by the decoder. This feature can be particularly useful when only a portion of the previous image is to be updated. The portions of the image not altered can be left un-encoded, and only the new portions of the image need be specified. FIGURE 1 shows a sample background from an iTV shopping application that might utilize this capability. In this case, a home-shopping application shows various small full-color images of products that the viewer may wish to purchase, superimposed over a full-color static background.

A sample product display is shown in FIGURE 2. Each product image is displayed on a full-color background that doesn't change. While each separate product could be depicted in a separate full-frame image with background (encoded as an I-frame), this would waste bandwidth in the broadcast stream.

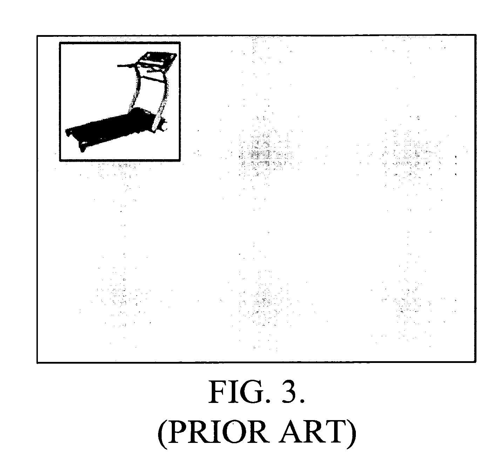

FIGURE 3 shows the change required to update the background image of the application, with the gray color indicating those portions of the image that need not change. This image obviously contains significantly less content than does FIGURE 2, and so would compress to a smaller data file. By encoding FIGURE 3 as a P-frame file, only the altered portion of the background image would contain DCT image coefficient data.

The use of P-frame MPEG files to save bandwidth is well known in the art. For example, OpenTV, the creators of the OpenTV middleware for STBs, distributes a software tool called OpenFrame that enables the composition of a P-frame image, and encoding of the resulting data into a compliant MPEG data file.

While P-frame images represent a significant savings in bandwidth over I-frame images, there are several inherent limitations to using P-frame images. First, the entire content of the video frame must be encoded in the P-frame image, including those portions of the background which are not altered. This is done by including slices with empty content in the MPEG data file. Each slice defines a row of macroblocks across the screen, each macroblock encoding a block of 16 columns by16 lines of video.

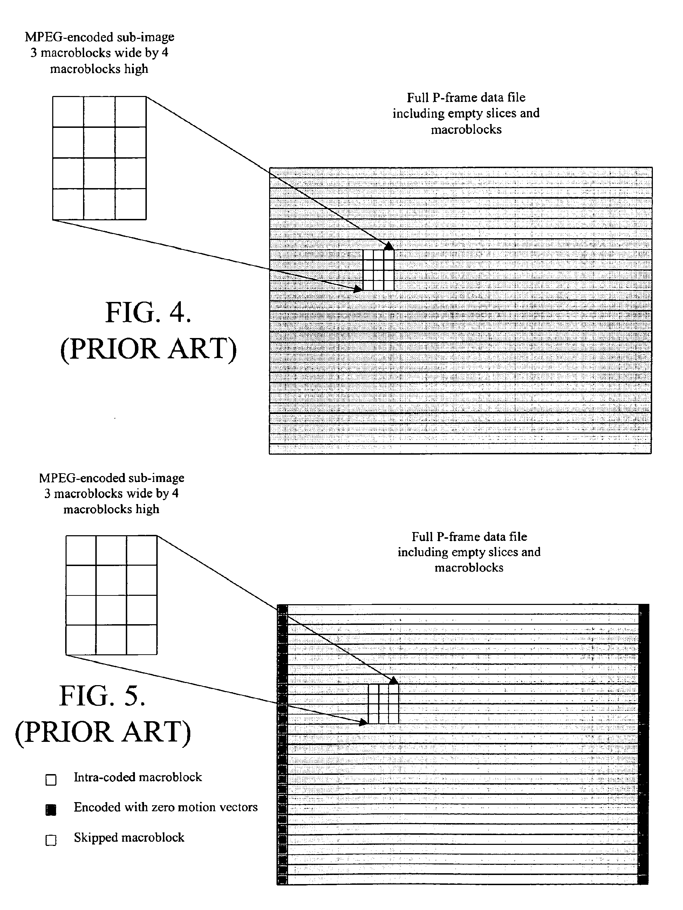

FIGURE 4 shows schematically how to construct a P-frame MPEG picture that encoded only a portion of the full-sized image. Every macroblock of the sub-image is encoded using the conventional MPEG macroblock encoding rules. Each macroblock row in the sub-image is a distinct slice, and the corresponding P-frame MPEG file will consist of a slice for each macroblock row in the full image. This figure illustrates the technique employed by OpenFrame when encoding a P-frame image.

In FIGURE 4, each horizontal row of macroblocks is encoded as a single slice. The first (left-most) and last (right-most) macroblocks of each slice must be encoded. One technique for doing this is to encode each (empty) macroblock as a motion-compensated (MC) macroblock, with no differential content. For this macroblock encoding type, two motion vectors are supplied giving the horizontal and vertical offsets of the corresponding image content from the previous (reference) frame to be copied into the new frame upon decoding. The supplied motion vectors are (0,0), indicating that the underlying reference macroblock is simply copied. No differential content is required, as the intent is to reproduce the reference frame content exactly. All skipped macroblocks in the image are simply copied from the reference frame.

To show the encoding technique more clearly, FIGURE 5 indicates the macroblocks that are encoded with zero motion vectors, and the macroblocks that are skipped. The technique depicted in FIGURE 5 is that employed by OpenFrame when generating P-frame MPEG files.

When P-frame encoding is used to update only a portion of the video image, the data file is typically created on a server, then broadcast to the STB. As described above, the OpenTV OpenFrame application is one tool for creating such an MPEG data file. FIGURE 5 visually demonstrates a disadvantage of this approach, namely that much of the image area is encoded using fixed data content. Given only the position of the sub-frame image data, the remainder of the P-frame data file can be constructed without knowledge of the contents of the sub-frame image. Each empty slice has the identical content, differing only in the slice number portion of the slice start code. Furthermore, much of the content of the slices that include the sub-image can be pre-determined as well, since the content of those portions of each slice outside the sub-image depends only on the number of empty macroblocks to the left and right of the sub-image. In other words, the contents of the slices containing the sub-frame macroblocks consists of padding on the left, the sub-frame macroblock content, and padding on the right. The padding is identical for each slice containing part of the sub-image, and can be determined from just the position of the sub-image, without regard to the sub-image content. The transmission of the full image thus uses greater bandwidth than required.

A second and much more significant limitation is the fact that any one P-frame data file represents a unique position for the sub-image content. This means that each different placement of the sub-frame content on the video screen requires a unique MPEG file. In one application, a series of sub images are desired to be shown in a line across the screen. By using the navigational keys of the remote control, the viewer can scroll the list left or right to examine a set of images larger than can fit on the screen at one time. With each navigational move, an image moves one position to the left or right. This replacement of the image requires a different MPEG image. Using the conventional technique of encoding a P-frame image, this application would require that each small image be provided in four different forms, one for each possible position of the small image on the video screen.

Boucher et al., in US Patent 6,675,387, describe a system that attempts to overcome some of the limitations of the MPEG file format. In particular, '387 addresses the issue that a single macroblock, the smallest increment of picture area that can be represented in an MPEG file, comprises a number of bits that is not predictable; furthermore, the bit count for a macroblock need not be a multiple of 8 bits. Therefore, within a given MPEG P-frame file, denotation of the bits encoding a single macroblock requires both start and end byte and bit locations. To accommodate this limitation, Boucher et al. define a "fat macroblock" encoding technique, whereby headers in the image file contain pointers to the beginning of each macroblock strip (slice), as well as pointers to the beginning of each macroblock within the strip. '387 describes the usage of fat macroblock data within an image server, wherein the specially encoded fat macroblock image is used to create a conforming MPEG P- or B-frame image file, which is then transmitted to the client for decoding and display. This approach requires communication from the client to the server for each image to be displayed.

Therefore, there exists a need for systems and methods that permit the efficient encoding of an image that is smaller than a full-sized image, coupled with efficient repositioning of the sub-image within the full-sized image.

## SUMMARY OF THE INVENTION

The current invention describes a technique for encoding a sub-image, using conventional MPEG encoding technique, to generate a special image file that is smaller than the equivalent full-frame image file. This special image file can be used to regenerate any of a multiplicity of full-sized encoded image files, each of which results in the display of the sub-frame image at one of a multiplicity of positions within the full-sized image frame.

**BRIEF DESCRIPTION OF THE DRAWINGS**

Preferred and alternative embodiments of the present invention are described in detail below with reference to the following drawings.

FIGURES 1-5 illustrate features of the prior art;

FIGURES 6 and 7 illustrate components of a system formed in accordance with an embodiment of the present invention;

FIGURE 8 illustrates an example process performed by the components shown in FIGURES 6 and 7;

FIGURE 9 illustrates an image file format formed in accordance with an embodiment of the present invention;

FIGURE 10 illustrates a decoding example;

FIGURE 11 illustrates an example of how two image files are combined before decoding; and

FIGURE 12 illustrates an example of how image files are used in a scrolling window application.

**DETAILED DESCRIPTION OF THE PREFERRED EMBODIMENT**

The current invention defines a special format for MPEG video data, which results in an intermediate sub-frame image data file (the 'Q-frame' format) which is not compliant with the MPEG standard, but which can be used efficiently to create a compliant MPEG P-frame data file, with the sub-frame positioned at any desired (macroblock) position within the full video frame.

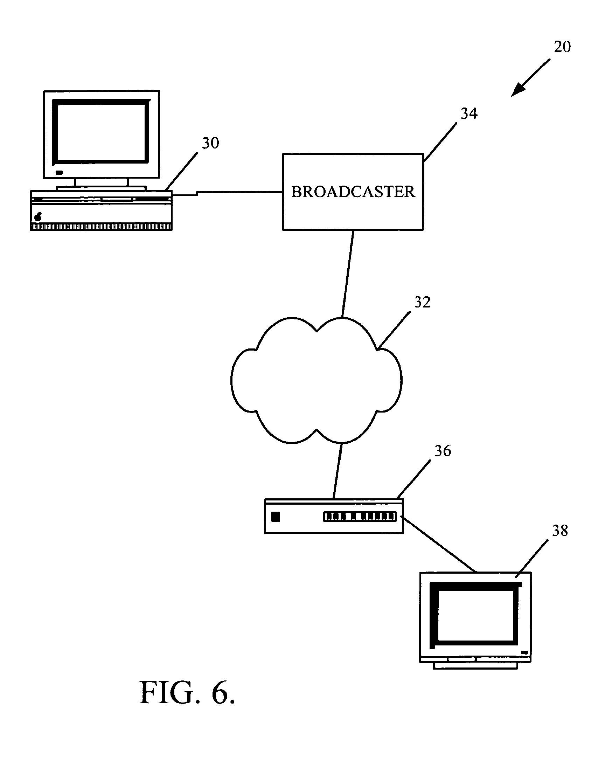

FIGURE 6 shows a diagram of a system 20 that creates and uses Q-frame data files. Prior to broadcast, a sub-frame image file passes through a special MPEG video encoder device 30 that produces the intermediate Q-frame file. The Q-frame file is multiplexed with other audio, video and data content for broadcast by the device 30, a broadcast device 34 or some other multiplexing device. The multiplexed data stream is broadcast to a Set-Top Box (STB) 36 over a broadcast network 32. The STB 36 extracts the Q-frame data and passes the Q-frame data to an iTV application running on the STB 36. The iTV application, using the techniques described in this invention, creates a P-frame data file in memory using the Q-frame data, then passes the P-frame data to middleware for decoding by a MPEG hardware decoder includes in the STB 36. The resulting image is displayed on a viewer's television screen (display 38).

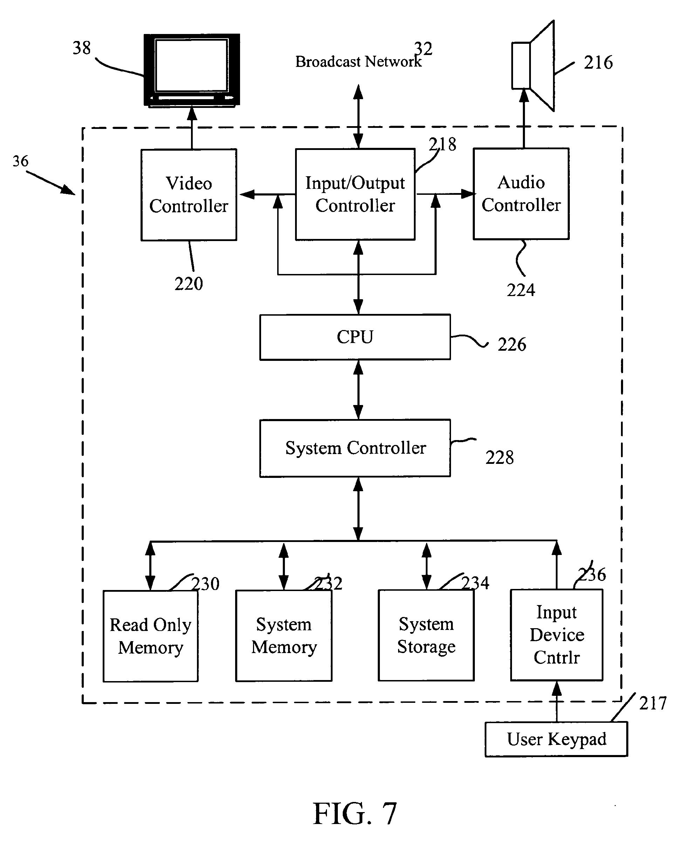

FIGURE 7 shows an example of the device STB (data processing/media control reception system) 36 operable for using embodiments of the present invention. The STB 36 receives data from the broadcast network 32, such as a broadband digital cable network, digital satellite network, or other data network. The STB 36 receives audio, video, and data content from the network 32. The STB 36 controls the display 38, such as a television, and an audio subsystem 216, such as a stereo or a loudspeaker system. The STB 36 also receives user input from a wired or wireless user keypad 217, which may be in the form of a STB remote.

The STB 36 receives input from the network 32 via an input/output controller 218, which directs signals to and from a video controller 220, an audio controller 224, and a central processing unit (CPU) 226. In one embodiment, the input/output controller 218 is a demultiplexer for routing video data blocks received from the network 32 to a video controller 220 in the nature of a video decoder, routing audio data blocks to an audio controller 224 in the nature of an audio decoder, and routing other data blocks to a CPU 226 for processing. In turn, the CPU 226 communicates through a system controller 228 with input and storage devices such as ROM 230, system memory 232, system storage 234, and input device controller 236.

The system 36 thus can receive incoming data files of various kinds. The system 36 can react to the files by receiving and processing changed data files received from the network 32.

When a P-frame data file is passed to the MPEG hardware decoder, the decoder will have a reference image created by previously decoding some desired MPEG video data, either streaming video or an MPEG data file. When the P-frame data file is passed through the decoder, the sub-frame image will replace the corresponding portions of the reference image, and be displayed on the television.

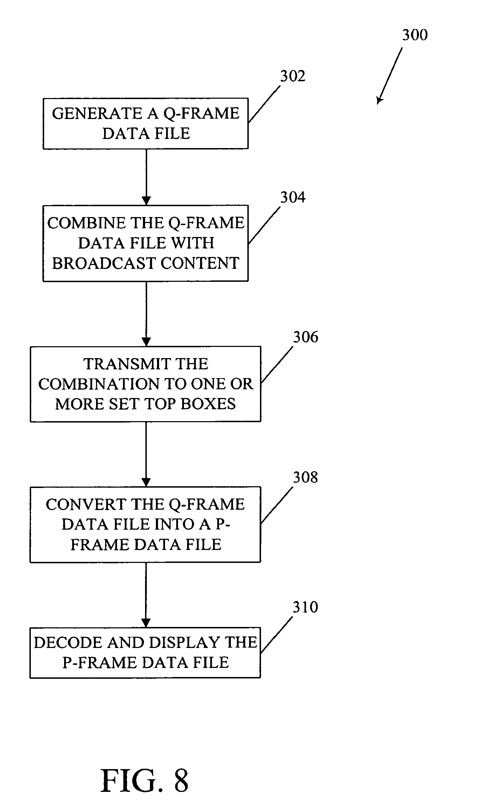

FIGURE 8 illustrates a flowchart of an example process 300 performed by the system 20 shown in FIGURE 6. At a block 302, a Q-frame data file is generated at the device 30. At a block 304, the Q-frame data file is combined with broadcast content at the broadcast device 34. The functions performed by the devices 30 and 34 may be performed by a single device or performed by multiple components distributed over the network 32 or another network. At a block 306, the combined data is transmitted to one or more STBs 36 over the network 32. At a block 308, the STB 36 converts the Q-frame data file into a P-frame data file. At a block 310, the P-frame data file is decoded and displayed.

**Q-frame data format**

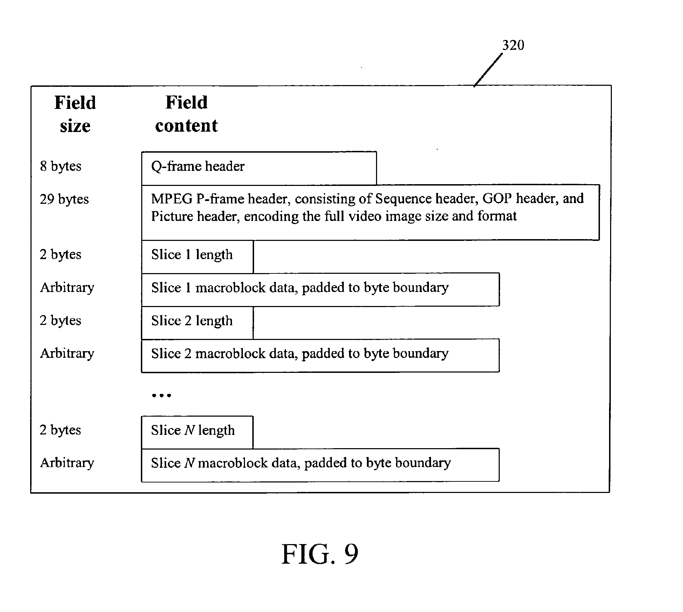

The Q-frame data file contains correctly-formatted MPEG bit sequences for all of the macroblocks in the sub-frame image. To conserve space in the Q-frame data file, and thus in the broadcast stream, all unnecessary data are eliminated from the file. FIGURE 9 shows an example format 320 for the content of a Q-frame file. Image data for the Q-frame file includes a series of macroblock slices. The first two bytes of each slice are encoded as a 16-bit, most-significant-bit-first value, that specifies the total number of bits for the slice data. Following this field is conventional MPEG P-frame slice data, encoded as if the sub-frame image were the actual image being encoded. The slice data starts with a five-bit quantizer value and a single zero bit. Following this prefix, each macroblock in the slice is encoded using conventional MPEG encoding. Macroblock data within a slice is encoded by the field sequence
[macroblock address increment] [macroblock type Intra/Quant] [quantizer] [block 0 data]
[block 1 data] ... [block 5 data] [macroblock address increment] ...[block 5 data]

The only special feature of the slice encoding in a Q-frame file is that the first macroblock address increment is 1 (encoded as a single 1 bit), and the first macroblock is encoded as type Intra with Quant (with the type field encoded as the six-bit sequence 000011), followed by the five-bit quantizer value. Following this are encoded DC and AC coefficients of the six blocks in the macroblock. The remaining macroblocks in the slice are encoded with macroblock address increments of 1 and macroblock encoding type Intra or Intra with Quant (for details, see ISO/IEC 11172-2).

Note several aspects of the Q-frame MPEG header. First, Q-frame MPEG header is fixed for any video frame size, and the only useful data in the header is the video width and height. As an alternative to including the header data in the Q-frame, the data could be generated on the STB 36 and prepended to the generated P-frame. Also, the Q-frame data file could be encoded as an MPEG-2 file, in which case the Q-frame header includes a sequence header, a sequence extension, a sequence display extension, a picture header, a picture coding extension and a picture display extension. Again, all of these data are constant for any given display system, and could be generated in the STB 36 rather than transferred as part of the Q-frame file.

**Padding the slice data to position the sub-frame data**

The macroblock data for any one slice includes a sequence of bit fields. The length and value of a field code depends on the type of field, and the encoding process is determined by successively interpreting each field, to determine the type of the following field. Because Huffman coding is used for most fields, the length of a field can only be determined from its content, and is not fixed *a priori*. The only exceptions to this rule are the quantizer field, which is always 5 bits, and the extra slice bit, which is always 1 bit.

The Q-frame format 320 specifies the sizes of a few additional fields, namely the first macroblock address increment field (1 bit), the first macroblock encoding type field (6 bits), and the presence and size (5 bits) of the quantizer field following the type field. Together, these stipulations produce the following bit pattern at the beginning of each slice:

$$\texttt{qqqqq010 \ 00001qqq \ qqxxxxxx \ xxxxxxxx \ ...} \qquad\qquad (1)$$

where qqqqq is the quantizer, and xxx... represents the additional bits encoding the remainder of the macroblock, and the other macroblocks in the slice after the first.

In order to reposition the sub-frame macroblocks within the (larger) slice of the full-frame video image, additional data may be inserted into the beginning of the slice data, and further additional data may be appended to the end of the slice. These data encode additional macroblock padding in the image in order to satisfy the MPEG rules for slice encoding, namely that the first and last macroblocks of each slice be encoded (even if the encoding merely copies the corresponding macroblock from the previous reference picture).

One way to insert initial padding is to start the macroblock sequence with an empty macroblock (encoded with the bit sequence 1 001 1 1, corresponding to a macroblock address increment of 1, a type of motion-compensated with no data, and two zero motion vectors). The six-bit sequence specifies that the corresponding macroblock from the reference image is copied into the macroblock location, which is equivalent to skipping the macroblock. Then if necessary, the macroblock address increment field can be changed from a value of 1 to any desired value, by substituting the appropriate bit sequence into the output data file. The appropriate bit sequences for various macroblock address increments are given in ISO/IEC 11172-2.

For example, moving the left-most macroblock of a sub-frame from the left edge of the video image to a position three macroblocks (48 columns) from the left edge, would require the following sequence of bits at the beginning of the slice data:

$$\texttt{qqqqq010 \ \underline{01110100} \ 00001qqq \ qqxxxxxx \ xxxxxxxx \ ...} \qquad\qquad (2)$$

with the 8 inserted bits encoding a macroblock address increment of 1 (single 1 bit), a macroblock type of motion-compensated, no data (001), two zero motion vectors (two single 1 bits), and a macroblock address increment of 3 (010). The encoded data for the sub-frame follows this insertion. This pattern can be compared with the original Q-frame data for the slice

$$\texttt{qqqqq010 \ 00001qqq \ qqxxxxx \ xxxxxxxx \ ...} \qquad\qquad \texttt{(3)}$$

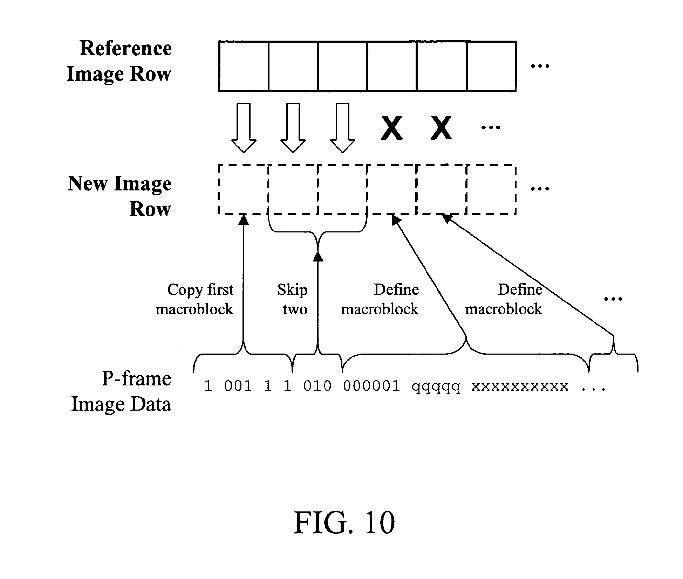

to observe that in the new P-frame data, the first byte is identical to the original and a single new byte of data has been inserted. All remaining bytes of the original data are copied without modification. FIGURE 10 shows how the resulting data would be interpreted by the MPEG decoder.

Note a particular feature of this insertion, namely that the length of the insertion is exactly 8 bits. This means that the remainder of the encoded macroblock data for the slice is already properly byte-aligned. Suppose for comparison that this technique were used to position the sub-frame data 64 columns from the left edge. This would result in the bit pattern

$$\texttt{qqqqq0}\underline{\texttt{10}} \ \ \underline{\texttt{01110011}} \ \texttt{000001qq \ qqqxxxx \ xxxxxxxx \ ...} \qquad\qquad \texttt{(4)}$$

In this case, the macroblock data for the sub-frame would have to be shifted by one bit position right from its original byte location. Creating the new P-frame data in this case would require bit shift operations for every byte of the macroblock data in each slice, as opposed to the simpler byte copy operation that would suffice for the case described above.

Table 1 shows the size of the insertion required to specify various numbers of empty macroblocks when repositioning a sub-frame within a conventional (720-column) video image, using the procedure described above. Only the bold cases would result in byte alignment of the following encoded macroblock data.

| Border width | Number of bits | | Border width | Number of bits | | Border width | Number of bits |
|---|---|---|---|---|---|---|---|
| 0 | 0 | | 15 | 13 | | **30** | **16** |
| 1 | 6 | | 16 | 15 | | **31** | **16** |
| **2** | **8** | | 17 | 15 | | **32** | **16** |
| **3** | **8** | | 18 | 15 | | **33** | **16** |
| 4 | 9 | | 19 | 15 | | 34 | 17 |
| 5 | 9 | | 20 | 15 | | 35 | 19 |
| 6 | 10 | | 21 | 15 | | 36 | 19 |
| 7 | 10 | | **22** | **16** | | 37 | 20 |
| 8 | 12 | | **23** | **16** | | 38 | 20 |
| 9 | 12 | | **24** | **16** | | 39 | 21 |
| 10 | 13 | | **25** | **16** | | 40 | 21 |
| 11 | 13 | | **26** | **16** | | 41 | 23 |
| 12 | 13 | | **27** | **16** | | 42 | 23 |
| 13 | 13 | | **28** | **16** | | **43** | **24** |
| 14 | 13 | | **29** | **16** | | **44** | **24** |

Table 1

The MPEG-1 video encoding standard allows a technique for padding macroblock data, namely, the insertion of one or more copies of the macroblock stuffing pattern at each occurrence of the macroblock address increment field. This 11-bit pattern can be repeated any number of times, and is ignored by a compliant decoder. Thus the second case described above could have been encoded with the following bit pattern

```
qqqqq010  01110000  00011110  00000011  11000000  01111000

00001111  00000001  11100110  00001qqq  qqxxxxxx  xxxxxxxx  ...

(5)
```

This approach is undesirable. While inserting macroblock stuffing results in proper byte alignment for the following macroblock data, a total of seven extra bytes of data is required for each slice in this example. An additional complication with this technique is that macroblock stuffing is not supported in the MPEG-2 video standard, so encoding a P-frame as an MPEG-2 video data file could not use this approach. The current invention circumvents this limitation.

**Optimized left-margin padding for P-frames**

Thus, an important aspect of the current invention is a technique for inserting left-margin padding when generating the P-frame data from a Q-frame data file, such that the encoded macroblock data for each slice can be copied in a byte-aligned manner, that is, without bit shifting, from the Q-frame data source into the corresponding P-frame data buffer. This section describes how this is accomplished.

Two features of MPEG macroblock video encoding are used to accomplish this. The first feature is the interchange of the "Intra with Quant" and "Intra" macroblock encoding types for a P-frame. When a macroblock is encoded as "Intra with Quant", the type field is 6 bits, and the quantizer field is 5 bits. When the same macroblock is encoded as "Intra", the type field is 5 bits, and no quantizer field appears.

The second feature is the ability to insert "zero-motion-vector" macroblocks at any padding position. Encoding a macroblock as type "motion-compensated, no data" and motion vectors of (0,0), which is done in the above examples with the first macroblock in each slice, simply copies the macroblock from the reference image. Encoding such a macroblock requires 5 bits, plus the macroblock address increment field.

These two features can be combined in appropriate ways to permit the insertion of any (left-hand) margin by a combination of bits that permits the following encoded macroblock data to be copied from the Q-frame data buffer into the P-frame data buffer without any bit shifting. How this is accomplished can be illustrated with a few examples.

First, suppose the sub-image data is to be positioned 16 columns from the left edge of the frame. This requires one padding macroblock to be inserted into the P-frame data stream at the beginning of each slice containing sub-frame image data. This can be accomplished by inserting a zero-motion-vector macroblock as the first macroblock in the slice (encoded as 1 001 1 1), then changing the encoding type of the first macroblock in the encoded sub-image data from type "Intra with Quant" (000001) to "Intra" (00011). The resulting data stream is

$$\texttt{qqqqq010 } \underline{\texttt{01111000}} \text{ } \underline{\texttt{11}}\texttt{xxxxx xxxxxxxx ...} \hspace{3cm} (6)$$

which can be compared with the original few bytes [from (1) above] of the Q-frame slice data

$$\texttt{qqqqq010 00001qqq qqxxxxx xxxxxxxx ...} \hspace{3cm} (7)$$

to observe that in the new P-frame data, the first byte is identical to the original, the second byte has been changed, and the third byte has had the leading two bits set to 11. All remaining bytes of the original data are copied without modification.

As another example, consider the case where the sub-image data is placed 64 columns from the left edge of the video frame. Rather than using the previous encoding depicted in (3) above, the initial portion of the slice is encoded using two consecutive zero-motion-vector macroblocks, a macroblock address increment of 3, and an encoding type of "Intra". The resulting bit pattern is

$$\texttt{qqqqq0}\underline{\texttt{10}} \text{ } \underline{\texttt{01111001}} \text{ } \underline{\texttt{11010000}} \text{ } \underline{\texttt{11}}\texttt{xxxxx xxxxxxxx ...} \hspace{2cm} (8)$$

which changes the second byte of the original data, inserts a single new byte, and changes the leading bits of the third byte of the original data, leaving the remainder of the original data unchanged.

Using these two techniques (inserting one or more zero-motion-vector blocks, and modifying the encoding type of the first macroblock in the sub-frame data), every possible border width can be encoded such that in creating the P-frame data for the macroblock slice, the first byte of the original macroblock data from the Q-frame data buffer is unchanged; the second byte is modified; zero or more bytes are inserted; the third byte is either unchanged, or has the leading two bits set to 11; and the remainder of the Q-frame data for the slice is copied unchanged. Table 2 depicts the appropriate encoding technique for each possible border width. In the contents listing, **inc** signals the macroblock address increment, **ZMB** (zero-motion-vector macroblock), **Intra** signals a macroblock encoding type of "Intra", and **Quant** signals a macroblock encoding type of "Intra/Quant"

Table 2

| Border width (macro-blocks) | Padding contents | Resulting bit pattern |
|---|---|---|
| 0 | None, copy original data unchanged | qqqqq010 00001qqq qqxxxxx ... |
| 1 | inc 1, ZMB, inc 1, Intra | qqqqq010 01111000 11xxxxx ... |
| 2 | inc 1, ZMB, inc 2, Quant | qqqqq010 01110110 00001qqq qqxxxxxx ... |
| 3 | inc 1, ZMB, inc 3, Quant | qqqqq010 01110100 00001qqq qqxxxxxx ... |
| 4 | inc 1, ZMB, inc 1, ZNM, inc 3, Intra | qqqqq010 01111001 11010000 11xxxxxx ... |
| 5 | inc 1, ZMB, inc 2, ZMB, inc 3, Quant | qqqqq010 01110110 01110100 00001qqq qqxxxxxx ... |
| 6 | inc 1, ZMB, inc 3, ZMB, inc 3, Quant | qqqqq010 01110100 01110100 00001qqq qqxxxxxx ... |
| 7 | inc 1, ZMB, inc 1, ZMB, inc 6, Quant | qqqqq010 01111001 11000110 00001qqq qqxxxxxx ... |
| 8 | inc 1, ZMB, inc 1, ZMB, inc 7, Quant | qqqqq010 01111001 11000100 00001qqq qqxxxxxx ... |
| 9 | inc 1, ZMB, inc 1, ZMB, inc 1, ZMB, inc 7, Intra | qqqqq010 01111001 11100111 00010000 11xxxxxx ... |
| 10 | inc 1, ZMB, inc 1, ZMB, inc 1, ZMB, inc 8, Quant | qqqqq010 01111001 11100111 00001110 00001qqq qqxxxxxx ... |
| 11 | inc 1, ZMB, inc 1, ZMB, inc 1, ZMB, inc 9, Quant | qqqqq010 01111001 11100111 00001100 00001qqq qqxxxxxx ... |
| 12 | inc 1, ZMB, inc 1, ZMB, inc 1, ZMB, inc 1, ZMB, inc 9, Intra | qqqqq010 01111001 11100111 10011100 00110000 11xxxxxx ... |
| 13 | inc 1, ZMB, inc 1, ZMB, inc 1, ZMB, inc 2, ZMB, inc 9, Quant | qqqqq010 01111001 11100111 01100111 00001100 00001qqq qqxxxxxx ... |
| 14 | inc 1, ZMB, inc 10, ZMB, inc 4, Intra | qqqqq010 01110000 10110011 10011000 11xxxxxx ... |
| 15 | inc 1, ZMB, inc 10, ZMB, inc 5, Intra | qqqqq010 01110000 10110011 10010000 11xxxxxx ... |
| 16 | inc 1, ZMB, inc 11, ZMB, inc 5, Intra | qqqqq010 01110000 10100011 10010000 11xxxxxx ... |
| 17 | inc 1, ZMB, inc 12, ZMB, inc 5, Intra | qqqqq010 01110000 10010011 10010000 11xxxxxx ... |
| 18 | inc 1, ZMB, inc 13, ZMB, inc 5, Intra | qqqqq010 01110000 10000011 10010000 11xxxxxx ... |
| 19 | inc 1, ZMB, inc 14, ZMB, inc 5, Intra | qqqqq010 01110000 01110011 10010000 11xxxxxx ... |
| 20 | inc 1, ZMB, inc 15, ZMB, inc 5, Intra | qqqqq010 01110000 01100011 10010000 11xxxxxx ... |
| 21 | inc 1, ZMB, inc 16, ZMB, inc 5, Quant | qqqqq010 01110000 01011100 11100100 00001qqq qqxxxxxx ... |

(continued)

| Border width (macro-blocks) | Padding contents | Resulting bit pattern |
|---|---|---|
| 22 | inc 1, ZMB, inc 22, Quant | qqqqq010 01110000 01000110 00001qqq qqxxxxxx ... |
| 23 | inc 1, ZMB, inc 23, Quant | qqqqq010 01110000 01000100 00001qqq qqxxxxxx ... |
| 24 | inc 1, ZMB, inc 24, Quant | qqqqq010 01110000 01000010 00001qqq qqxxxxxx ... |
| 25 | inc 1, ZMB, inc 25, Quant | qqqqq010 01110000 01000000 00001qqq qqxxxxxx ... |
| 26 | inc 1, ZMB, inc 26, Quant | qqqqq010 01110000 00111110 00001qqq qqxxxxxx ... |
| 27 | inc 1, ZMB, inc 27, Quant | qqqqq010 01110000 00111100 00001qqq qqxxxxxx ... |
| 28 | inc 1, ZMB, inc 28, Quant | qqqqq010 01110000 00111010 00001qqq qqxxxxxx ... |
| 29 | inc 1, ZMB, inc 29, Quant | qqqqq010 01110000 00111000 00001qqq qqxxxxxx ... |
| 30 | inc 1, ZMB, inc 30, Quant | qqqqq010 01110000 00110110 00001qqq qqxxxxxx ... |
| 31 | inc 1, ZMB, inc 31, Quant | qqqqq010 01110000 00110100 00001qqq qqxxxxxx ... |
| 32 | inc 1, ZMB, inc 32, Quant | qqqqq010 01110000 00110010 00001qqq qqxxxxxx ... |
| 33 | inc 1, ZMB, inc 33, Quant | qqqqq010 01110000 00110000 00001qqq qqxxxxxx ... |
| 34 | inc 1, ZMB, inc 1, ZMB, inc 33, Intra | qqqqq010 01111001 11000000 11000000 11xxxxxx ... |
| 35 | inc 1, ZMB, inc 2, ZMB, inc 33, Quant | qqqqq010 01110110 01110000 00110000 00001qqq qqxxxxxx ... |
| 36 | inc 1, ZMB, inc 3, ZMB, inc 33, Quant | qqqqq010 01110100 01110000 00110000 00001qqq qqxxxxxx ... |
| 37 | inc 1, ZMB, inc 1, ZMB, 3, ZMB, inc 33, Intra | qqqqq010 01111001 11010001 11000000 11000000 11xxxxxx ... |
| 38 | inc 1, ZMB, inc 17, ZMB, inc 21, Intra | qqqqq010 01110000 01011000 11100000 10010000 11xxxxxx ... |
| 39 | inc 1, ZMB, inc 18, ZMB, inc 21, Intra | qqqqq010 01110000 01010100 11100000 10010000 11xxxxxx ... |
| 40 | inc 1, ZMB, inc 19, ZMB, inc 21, Intra | qqqqq010 01110000 01010000 11100000 10010000 11xxxxxx ... |
| 41 | inc 1, ZMB, inc 20, ZMB, inc 21, Intra | qqqqq010 01110000 01001100 11100000 10010000 11xxxxxx ... |
| 42 | inc 1, ZMB, inc 21, ZMB, inc 21, Intra | qqqqq010 01110000 01001000 11100000 10010000 11xxxxxx ... |
| 43 | inc 1, ZMB, inc 43, Quant | qqqqq010 01110000 00010000 00010110 00001qqq qqxxxxxx ... |

(continued)

| Border width (macro-blocks) | Padding contents | Resulting bit pattern |
|---|---|---|
| 44 | inc 1, ZMB, inc 1, ZMB, inc 43, Intra | qqqqq010 01111001 11000000 11000000 01011000 11xxxxxx ... |

Note that the encodings given in Table 2 are not the only encodings that produce the desired characteristic that most of the macroblock encoding data can be copied directly from the Q-frame data buffer to the P-frame data buffer without bit shifts. For example, if the left margin is 64 columns (four macroblocks), the left margin could be encoded by any of the following patterns:

    inc 1, ZMB, inc 3, Quant
    inc 1, ZMB, inc 1, ZMB, inc 2, Intra
    inc 1, ZMB, inc 2, ZMB, inc 1, Intra

The encodings in Table 2 were selected for minimal number of inserted bytes, and the preferential use of "Intra with Quant" encoding.

**Right-side padding**

When creating the P-frame slice content from the Q-frame data, each slice containing Q-frame sub-image data must conclude on the right-most macroblock of the video frame. This may require the insertion of additional macroblock data at the end of the original Q-frame encoded macroblock data. Since the data for any given sequence of encoded macroblocks may end at an arbitrary bit boundary, the trailing data for the slice must be bit-aligned with the data from the Q-frame. For example, if a given Q-frame macroblock slice contains 0x103 bits, the last byte of the Q-frame slice data will contain three encoding bits, and 5 (zero) padding bits, as follows:

$$\texttt{qqqqq010 ... xxxxxxxx xxx}\underline{\texttt{00000}} \tag{9}$$

When additional macroblock data is appended to this data, the first new bit of the added data must be placed at the underlined position, with subsequent bits following.

The data appended to the end of each slice is constructed by inserting the appropriate macroblock address increment, followed by a macroblock encoded as type "motion vector, no data" with zero motion vectors. The required bit pattern can be constructed from the macroblock address increment table (ISO/IEC 11171-2), and is shown in the following table.

| Border width (macro- blocks) | Bit pattern to insert |
|---|---|
| 0 | none |
| 1 | 10011100 |
| 2 | 01100111 |
| 3 | 01000111 |
| 4 | 00110011 1 |
| 5 | 00100011 1 |
| 6 | 00011001 11 |
| 7 | 00010001 11 |
| 8 | 00001110 0111 |
| 9 | 00001100 0111 |
| 10 | 00001011 00111 |
| 11 | 00001010 00111 |

(continued)

| Border width (macro- blocks) | Bit pattern to insert |
|---|---|
| 12 | 00001001 00111 |
| 13 | 00001000 00111 |
| 14 | 00000111 00111 |
| 15 | 00000110 00111 |
| 16 | 00000101 1100111 |
| 17 | 00000101 1000111 |
| 18 | 00000101 0100111 |
| 19 | 00000101 0000111 |
| 20 | 00000100 1100111 |
| 21 | 00000100 1000111 |
| 22 | 00000100 01100111 |
| 23 | 00000100 01000111 |
| 24 | 00000100 00100111 |
| 25 | 00000100 00000111 |
| 26 | 00000011 11100111 |
| 27 | 00000011 11000111 |
| 28 | 00000011 10100111 |
| 29 | 00000011 10000111 |
| 30 | 00000011 01100111 |
| 31 | 00000011 01000111 |
| 32 | 00000011 00100111 |
| 33 | 00000011 00000111 |
| 34 | 0000001 100010011 1 |
| 35 | 00000011 00001100 111 |
| 36 | 00000011 00001000 111 |
| 37 | 00000011 00000110 0111 |
| 38 | 00000011 00000100 0111 |
| 39 | 00000011 00000011 00111 |
| 40 | 00000011 00000010 00111 |
| 41 | 00000011 00000001 1100111 |
| 42 | 00000011 00000001 1000111 |
| 43 | 00000011 00000001 01100111 |
| 44 | 00000011 00000001 01000111 |

Table 3

Appending the data patterns from Table 3 requires bit shifts and bit-wise OR operations to combine the original Q-frame encoded data with the padding macroblock data.

An additional observation can be made about the process for converting Q-frame data into the corresponding P-frame MPEG data file. Each empty slice in the P-frame requires the same amount of data (nine bytes, four for the slice start code and five to encode the quantizer, the first ZMB, the address increment of 44, and the last ZMB). The padding at the beginning of each slice containing sub-image data will be at most four bytes more than the original Q-frame data, while the padding at the end of the slice will be at most three bytes more than the original Q-frame data. The slice start code for each slice containing sub-image data will be four bytes, two more than the size of the slice-length field in the Q-frame data. A four-byte sequence end code is appended to the P-frame data. The size of each Q-frame slice is known at encoding time, so the size of the entire P-frame data buffer can be computed as:

$$\text{size of P-frame buffer} = \quad \text{size of Q-frame buffer} -$$

$$8 \text{ bytes from Q-frame header} +$$

$$( 2 + 4 + 3 ) \text{ bytes for each sub-frame slice} +$$

$$9 \text{ bytes for each empty slice} +$$

$$4 \text{ bytes for the sequence end code}$$

This size is pre-computed and placed in the header of the Q-frame data file. When a P-frame data buffer is created from the Q-frame contents, the maximum possible size of the P-frame buffer can be used to pre-allocate the required memory. The contents of the Q-frame header are given in Table 4.

Table 4

| Field width | Field contents |
|---|---|
| 4 bytes | Magic cookie - "QFRN" for NTSC video format, "QFRP" for PAL video format |
| 1 byte | Number of macroblocks per slice in the sub-image |
| 1 byte | Number of slices in the sub-image |
| 2 bytes | Number of bytes in the resulting P-frame data buffer |

**MPEG-2 image encoding**

As stated above, the Q-frame file could utilize an MPEG-2 header, and the resulting P-frame file would be MPEG-2 compliant.

**Support for various macroblock encoding types**

The encoding of the sub-frame image content need not be constrained to any particular encoding type. For instance, the quantizer value can change from macroblock to macroblock. In this case, the quantizer value for each slice should equal the quantizer for the first encoded macroblock, so that if the macroblock quantizer is eliminated, the correct slice quantizer value is used when decoding the first macroblock.

The preferred embodiment describes the case where a Q-frame is encoded independent of the contents of any previous reference frame. This is not an essential limitation. A series of sub-frame images could be encoded, in which each image is coded relative to the previous reference sub-frame image. In this case, the encoding could include motion-compensated encoding for a macroblock. The first (left-most) macroblock in each macroblock row must be encoded using Intra coding only, but the remaining macroblocks in each row could utilize any MPEG encoding technique valid for a macroblock in a P-frame image.

**Ensuring byte-alignment of the end of slice macroblock data**

The Q-frame encoder could manipulate the encoding of the last (right-most) macroblock in each row, by incorporating additional coefficients, or using alternate escape encoding of run-level values, to ensure that the number of bits in the row is an even multiple of eight, that is, that the data for the macroblock row exactly fills an integer number of bytes. In this case, the padding applied to the right border would also be byte-aligned, further simplifying the creation of the P-frame data.

**Combining Q-frame sub-images in a P-frame image**

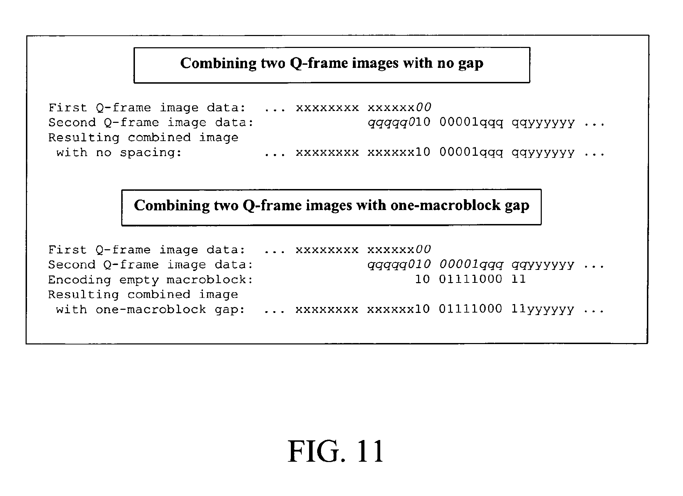

As a further alternative, the Q-frame encoder could ensure that each macroblock row filled an integer number of bytes, plus 6 bits, by incorporating additional coefficients into one or more macroblocks, or by using alternate escape encoding of run-level values. In this case, a second Q-frame image could be appended to the first image, optionally with padding between the images, using the techniques described above. FIGURE 11 shows how this would be accomplished. Since the quantizer value for the first macroblock in the second Q-frame image may be dropped, the quantizer for the two sub-frame images must be equal, or at minimum the quantizer for the last macroblock in each row of the first Q-frame image must be equal to the quantizer for the first macroblock in each row of the second Q-frame image.

Combining two sub-images in this way would require mask and bit-OR operations on the last byte of the first sub-image and the first byte of the second sub-image, but the remainder of the operations on the second sub-image data would be carried out as described in the preferred embodiment.

**Incorporating motion of the background image**

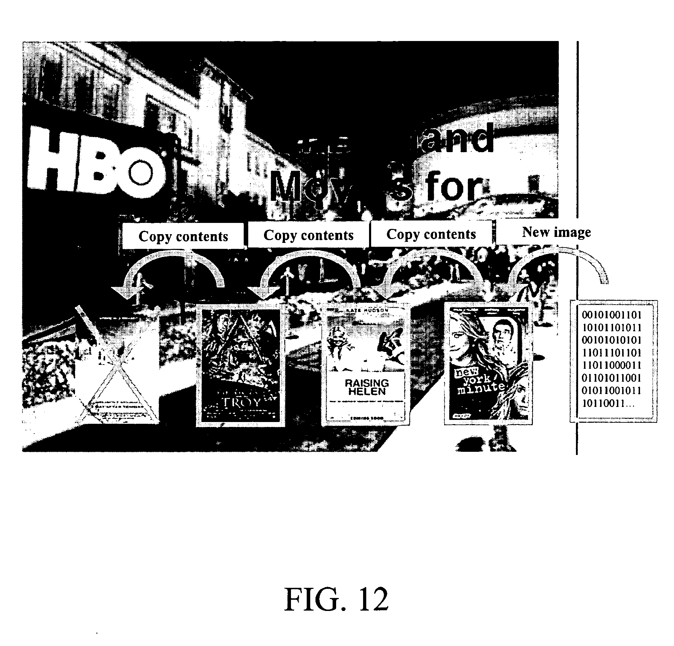

In some cases, such as the example shown in FIGURE 12, it would be desirable to define a P-frame that resulted in a new video image consisting of portions of the previous background in their original location, portions of the previous background in some new position, and the new sub-frame image content in a desired location. This could be accomplished by defining a sub-image that was encoded by motion-compensation from the reference image, then combining this motion sub-frame with a conventional Q-frame image using the technique described above. The combined P-frame image would processed as shown schematically in FIGURE 12.

**Encoding motion video using sub-frames**

In the preferred embodiment, the Q-frame technique is described in conjunction with the use of single still-frame images. However, the technique could be extended to create streaming video representations of sub-frame video. Each frame of the sub-frame video would be encoded as a Q-frame; the Q-frame would then be transferred to the display system, and the corresponding P-frame reconstructed. In this case, motion-based forward prediction could be used (except for the left-most macroblock in each row, as noted above) to reduce the total bit count for the image as desired. Provided the first macroblock in each row is encoded as type "Intra with Quant", the generated P-frame would still be a valid MPEG video frame. The remaining macroblocks in each row after the first would simply be decoded according to the normal rules for MPEG (or MPEG-2) decoding, with the result that the sub-frame video images would appear on the display in sequence. Necessarily, this would require sufficient processing power in the STB to regenerate each P-frame as required, but the current invention reduces the computational steps required to accomplish this task.

While the preferred embodiment of the invention has been illustrated and described, as noted above, many changes can be made without departing from the spirit and scope of the invention. For example, the present invention may be operable with video or image compression schemes other than MPEG or MPEG-2. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

**Claims**

1.    A method comprising:

combining an image data file and broadcast video content, wherein the image data is not compliant with MPEG and MPEG-2;
transmitting the combined image data file and video content;
receiving the transmitted image data file and video content;
generating a second image data file based on the first image data file, wherein the second image data file is compliant with at least one of MPEG or MPEG-2;
decoding the second image data file; and
displaying the decoded second image data file with the broadcast video content.

2.    The method of Claim 1, wherein the first image data file includes one or more slices having one or more macroblocks, wherein each macroblock in a slice is encoded using at least one of MPEG or MPEG-2 encoding format.

**3.** The method of Claim 2, wherein each slice includes total number of bits information for the slice.

**4.** The method of Claim 2, wherein generating includes byte aligning the macroblocks in a slice by padding the corresponding slice with data at the beginning of the slice based on frame position information included in the first image data file, wherein byte aligning produces slices that are encoded according to at least one of MPEG or MPEG-2.

**5.** The method of Claim 4, wherein the padding data includes at least one empty macroblock.

**6.** The method of Claim 4, wherein generating further includes padding data at the end of at least one slice.

**7.** The method of Claim 1, wherein the first image data file includes a header, wherein the header includes width and height information.

**8.** A system comprising:

a first component configured to combine an image data file and broadcast video content, wherein the image data is not compliant with MPEG and MPEG-2 and transmit the combined image data file and video content; and
a second component configured to receive the transmitted image data file and video content, generate a second image data file based on the first image data file, wherein the second image data file is compliant with at least one of MPEG or MPEG-2, decode the second image data file, and display the decoded second image data file with the broadcast video content.

**9.** The system of Claim 8, wherein the first image data file includes one or more slices having one or more macroblocks, wherein each macroblock in a slice is encoded using at least one of MPEG or MPEG-2 encoding format.

**10.** The system of Claim 9, wherein each slice includes total number of bits information for the slice.

**11.** The system of Claim 9, wherein the second component generates the second image data file by byte aligning the macroblocks in a slice, wherein byte aligning is performed by padding the corresponding slice with data at the beginning of the slice based on frame position information included in the first image data file, wherein byte aligning produces slices that are encoded according to at least one of MPEG or MPEG-2.

**12.** The system of Claim 11, wherein the padding data includes at least one empty macroblock.

**13.** The system of Claim 11, wherein the second component generates the second image data file by padding data at the end of at least one slice.

**14.** The system of Claim 8, wherein the first image data file includes a header, wherein the header includes width and height information.

**15.** A method comprising:

combining an image data file and broadcast video content, wherein the image data is formatted according to Q-frame format; and
transmitting the combined image data file and video content.

**16.** The method of Claim 15, wherein the first image data file includes one or more slices having one or more macroblocks, wherein each macroblock in a slice is encoded using at least one of MPEG or MPEG-2 encoding format.

**17.** The method of Claim 16, wherein each slice includes total number of bits information for the slice.

**18.** The method of Claim 15, wherein the first image data file includes a header, wherein the header includes width and height information.

**19.** A computer-based system comprising:

a first component configured to generate an image data file, wherein the image data is formatted according to Q-frame format;

a second component configured to combine the image data file and broadcast video content; and
a third component configured to transmit the combined image data file and video content.

20. The system of Claim 19, wherein the first image data file includes one or more slices having one or more macroblocks, wherein each macroblock in a slice is encoded using at least one of MPEG or MPEG-2 encoding.

21. The system of Claim 20, wherein each slice includes total number of bits information for the slice.

22. The system of Claim 19, wherein the first image data file includes a header, wherein the header includes width and height information.

23. A method comprising:

receiving an image data file and video content, wherein the image data is not compliant with MPEG and MPEG-2;
generating a second image data file based on the received image data file, wherein the second image data file is compliant with at least one of MPEG or MPEG-2;
decoding the second image data file; and
displaying the decoded second image data file with the broadcast video content.

24. The method of Claim 23, wherein the first image data file includes one or more slices having one or more macroblocks, wherein each macroblock in a slice is encoded using at least one of MPEG or MPEG-2 encoding format.

25. The method of Claim 24, wherein each slice includes total number of bits information for the slice.

26. The method of Claim 24, wherein generating includes byte aligning the macroblocks in a slice by padding the corresponding slice with data at the beginning of the slice based on frame position information included in the first image data file, wherein byte aligning produces slices that are encoded according to at least one of MPEG or MPEG-2.

27. The method of Claim 26, wherein the padding data includes at least one empty macroblock.

28. The method of Claim 26, wherein generating further includes padding data at the end of at least one slice.

29. The method of Claim 23, wherein the first image data file includes a header, wherein the header includes width and height information.

30. A system comprising:

a first component configured to receive an image data file and video content, wherein the image data is not compliant with MPEG and MPEG-2;
a second component configured to generate a second image data file based on the received image data file, wherein the second image data file is compliant with at least one of MPEG or MPEG-2;
a third component configured to decode the second image data file; and
a fourth component configured to display the decoded second image data file with the broadcast video content.

31. The system of Claim 30, wherein the first image data file includes one or more slices having one or more macroblocks, wherein each macroblock in a slice is encoded using at least one of MPEG or MPEG-2 encoding format.

32. The system of Claim 31, wherein each slice includes total number of bits information for the slice.

33. The system of Claim 31, wherein the second component generates the second image data file by byte aligning the macroblocks in a slice, wherein byte aligning is performed by padding the corresponding slice with data at the beginning of the slice based on frame position information included in the first image data file, wherein byte aligning produces slices that are encoded according to at least one of MPEG or MPEG-2.

34. The system of Claim 33, wherein the padding data includes at least one empty macroblock.

35. The system of Claim 33, wherein the second component generates the second image data file by padding data at the end of at least one slice.

**36.** The system of Claim 30, wherein the first image data file includes a header, wherein the header includes width and height information.

**37.** A method comprising:

combining an image data file and broadcast video content, wherein the image data is undecodable by a decode application program;
transmitting the combined image data file and video content;
receiving the transmitted image data file and video content;
generating a second image data file based on the first image data file, wherein the second image data file is decodable by a decode application program;
decoding the second image data file; and
displaying the decoded second image data file with the broadcast video content.

FIG. 1.
(PRIOR ART)

FIG. 2.
(PRIOR ART)

FIG. 3.
(PRIOR ART)

MPEG-encoded sub-image
3 macroblocks wide by 4
macroblocks high

Full P-frame data file
including empty slices and
macroblocks

# FIG. 4.
# (PRIOR ART)

MPEG-encoded sub-image
3 macroblocks wide by 4
macroblocks high

Full P-frame data file
including empty slices and
macroblocks

# FIG. 5.
# (PRIOR ART)

☐    Intra-coded macroblock

■    Encoded with zero motion vectors

☐    Skipped macroblock

FIG. 6.

38

Broadcast Network 32

216

36

Video
Controller

220

Input/Output
Controller 218

Audio
Controller

224

CPU 226

System Controller 228

230

Read Only
Memory

232

System
Memory

234

System
Storage

236

Input
Device
Cntrlr

217

User Keypad

FIG. 7

300

302

GENERATE A Q-FRAME
DATA FILE

304

COMBINE THE Q-FRAME
DATA FILE WITH
BROADCAST CONTENT

306

TRANSMIT THE
COMBINATION TO ONE OR
MORE SET TOP BOXES

308

CONVERT THE Q-FRAME
DATA FILE INTO A P-
FRAME DATA FILE

310

DECODE AND DISPLAY THE
P-FRAME DATA FILE

FIG. 8

320

| Field size | Field content |
|---|---|
| 8 bytes | Q-frame header |
| 29 bytes | MPEG P-frame header, consisting of Sequence header, GOP header, and Picture header, encoding the full video image size and format |
| 2 bytes | Slice 1 length |
| Arbitrary | Slice 1 macroblock data, padded to byte boundary |
| 2 bytes | Slice 2 length |
| Arbitrary | Slice 2 macroblock data, padded to byte boundary |
| | ... |
| 2 bytes | Slice $N$ length |
| Arbitrary | Slice $N$ macroblock data, padded to byte boundary |

# FIG. 9

**Reference
Image Row**

X X ...

**New Image
Row**

Copy first
macroblock

Skip
two

Define
macroblock

Define
macroblock

...

**P-frame
Image Data**

1 001 1 1 010 000001 qqqqq xxxxxxxxx ...

# FIG. 10

```
                    ┌─────────────────────────────────────────────────┐
                    │  Combining two Q-frame images with no gap        │
                    └─────────────────────────────────────────────────┘

First Q-frame image data:   ... xxxxxxxx xxxxxx00
Second Q-frame image data:                  qqqqq010 00001qqq qqyyyyyy ...
Resulting combined image
 with no spacing:           ... xxxxxxxx xxxxxx10 00001qqq qqyyyyyy ...


            ┌─────────────────────────────────────────────────────────────┐
            │  Combining two Q-frame images with one-macroblock gap        │
            └─────────────────────────────────────────────────────────────┘

First Q-frame image data:   ... xxxxxxxx xxxxxx00
Second Q-frame image data:                  qqqqq010 00001qqq qqyyyyyy ...
Encoding empty macroblock:                        10 01111000 11
Resulting combined image
 with one-macroblock gap:   ... xxxxxxxx xxxxxx10 01111000 11yyyyyy ...
```

# FIG. 11

26

FIG. 12

**EP 1 725 044 A2**

**REFERENCES CITED IN THE DESCRIPTION**

**Patent documents cited in the description**

- WO 60682030 A

- US 6675387 B, Boucher